# EUROPEAN PATENT APPLICATION

(11) **EP 4 235 542 A1**
(43) Date of publication of application: **30.08.2023**
(21) Application number: 23157911.1
(22) Date of filing: 22.02.2023
(51) Int. Cl.: G06Q 10/087, G06Q 30/0202, G06Q 10/107, G06Q 50/04, G06N 20/00

(54) **SYSTEMS AND METHODS FOR FORECASTING INVENTORY**

(30) Priority: 23.02.2022 IN 202221009645
(71) Applicant: Jio Platforms Limited, Gujarat 380006 (IN)
(72) Inventor: KUMAR,, Akansha, 500050 Hyderabad, Telangana (IN); LAKKIREDDY,, Manoj Reddy, 500090 Hyderabad, Telangana (IN); JAIN,, Saurabh, 450331 Burhanpur, Madhya Pradesh (IN); SURENDRAN,, Athira, 560059 Bangalore, Karnataka (IN); GUPTA,, Akhil, 560066 Bangalore, Karnataka (IN)
(74) Representative: Potter Clarkson

(57) **Abstract**

A system and method for providing a robust and effective solution for forecasting inventory for a warehouse/fulfilment centre (FC) at a product batch level. The method includes calculating a demand forecast data based on a forecast algorithm, correcting the calculated demand forecast data based on one or more exogenous variable, categorizing the inventory into different buckets at a product batch level, forecasting a warehouse level inventory demand for a predefined time based on the categorization. and sending an alert to one or more users based on the categorization. The method further includes predicting a demand forecast data for one or more upcoming weeks.

## Description

### FIELD OF INVENTION

The present disclosure relates to a method and a system in the field of e-commerce and in particular, the present disclosure relates to a method and system for demand planning and inventory optimization in the supply chain system.

### BACKGROUND OF THE INVENTION

The following description of related art is intended to provide background information pertaining to the field of the disclosure. This section may include certain aspects of the art that may be related to various features of the present disclosure. However, it should be appreciated that this section be used only to enhance the understanding of the reader with respect to the present disclosure, and not as admissions of prior art.

Inventory management is the entire process of managing inventories from raw materials to finished products. It includes the process of ordering, storing, using, and selling of products in a company's inventory. Inventory management tries to efficiently streamline inventories to avoid both gluts and shortages. It is more importance when it comes to grocery business due to the perishable nature of products.

A company's inventory is one of its most valuable assets. In retail, food manufacturing, food services, and other inventory-intensive sectors, the entity's inputs and finished products are the core of its business. A shortage of inventory when and where it's needed can be extremely detrimental. At the same time, inventory can be thought of as a liability (if not in an accounting sense). A large inventory carries the risk of spoilage, theft, or damage. Inventory must be insured, and if it is not sold in time it may have to be disposed of at clearance prices-or simply destroyed.

For these reasons, inventory management is important for businesses of any size. Knowing when to restock inventory, what amounts to purchase or produce, what price to pay-as well as when to sell and at what price-can easily become complex decisions. Small businesses will often keep track of stock manually and determine the reorder points and quantities using spreadsheet (Excel) formulas. Larger businesses will use specialized enterprise resource planning (ERP) software. The largest corporations use highly customized software as a service (SaaS) application.

Appropriate inventory management strategies vary depending on the industry. For businesses dealing in perishable goods or products for which demand is extremely time-sensitive- such as calendars of a particular year or fast-fashion items, sitting on inventory is not an option, and misjudging the timing or quantities of orders can be costly. For companies with complex supply chains and manufacturing processes, balancing the risks of inventory gluts and shortages is especially difficult.

There is therefore a need in the art to provide a system and a method that can mitigate the problems associated with the prior art.

### OBJECTS OF THE PRESENT DISCLOSURE

Some of the objects of the present disclosure, which at least one embodiment herein satisfies are as listed herein below.

It is an object of the present disclosure to provide for a system that facilitates warehouse level demand forecasting using automated best model selection for a predefined time.

It is an object of the present disclosure to provide for a system that facilitates demand correction based on localized festivals/events.

It is an object of the present disclosure to provide for a system that facilitates batch level inventory classification using Bayesian optimization to reduce inventory losses.

It is an object of the present disclosure to provide for a Sales and inventory integrated dashboards to better manage the inventory.

It is an object of the present disclosure to provide for an alert system to alert the business people before running into over stock scenario.

### SUMMARY

In an aspect of the present embodiment, a system for forecasting inventory is disclosed. The system includes one or more processors and a memory operatively coupled to the one or more processors, wherein the memory comprises processor-executable instructions, which on execution, cause the one or more processors to estimate a demand associated with a product by calculating a demand forecast data and correcting the calculated demand forecast data, categorize the inventory into different buckets at a product batch level based on the estimated demand, and forecast a warehouse level inventory demand for a predefined time based on the categorization. Further, in an embodiment, Bayesian optimization technique is used for categorizing the inventory into different buckets at the product batch level. The system is further configured to calculate the demand forecast data based on an forecast algorithm, wherein the forecast algorithm includes at least one of an Autoregressive Integrated Moving Average Model (ARIMA), a Long short-term memory model (LSTM), an Extreme Gradient Boosting model (XGBOOST), and Holt-Winters and correct the calculated forecast data based on exogenous variables, wherein the exogenous variables include at least one of local demographics, festivals, calendar, and competition. The system is further configured to send an alert to users based on the categorization.

In some aspect of the present embodiment, the system is configured to estimate a future category of the current inventory based on the forecasted demand and provide key metrics for inventory optimization and update the key metrics periodically.

In another aspect of the present embodiment, a method for forecasting inventory is disclosed. The method includes calculating, by a processor, a demand forecast data based on a forecast algorithm, correcting, by the processor, the calculated demand forecast data based on one or more exogenous variable, categorizing, by the processor, the inventory into different buckets at the product batch level, forecasting, by the processor, a warehouse level inventory demand for a predefined time based on the categorization, and sending an alert, by the processor, to one or more users based on the categorization. The method further includes predicting, by the processor, the demand forecast data for one or more upcoming weeks.

In another aspect, a user equipment (UE) for forecasting inventory, including one or more processors; and a memory operatively coupled to the one or more processors is disclosed. The memory includes processor-executable instructions, which on execution, cause the one or more processors to transmit a pre-processed data comprising at least one of sales data, product data, daily inventory data, and batch level inventory data to an optimization system, and receive an alert from the optimization system based on a categorization performed by the optimization system on the transmitted pre-processed data. The UE includes for example, without limitations, a smart phone, a point of service (POS) terminal, electronic carrier for automatic recognition, etc.

### BRIEF DESCRIPTION OF DRAWINGS

The accompanying drawings, which are incorporated herein, and constitute a part of this invention, illustrate exemplary embodiments of the disclosed methods and systems in which like reference numerals refer to the same parts throughout the different drawings. Components in the drawings are not necessarily to scale, emphasis instead being placed upon clearly illustrating the principles of the present invention. Some drawings may indicate the components using block diagrams and may not represent the internal circuitry of each component. It will be appreciated by those skilled in the art that invention of such drawings includes the invention of electrical components, electronic components or circuitry commonly used to implement such components.
FIG. 1 illustrates exemplary architecture (100) in which or with which proposed system may be implemented, in accordance with an embodiment of the present disclosure.
FIG. 2 illustrates an exemplary representation (200) of a forecast and alert system (110) for inventory management, in accordance with an embodiment of the present disclosure.
FIG. 3 illustrates exemplary representation of an architecture of the proposed inventory management system (300), in accordance with an embodiment of the present disclosure.
FIG. 4 illustrates an exemplary artificial intelligence (AI) engine module (400), in accordance with an embodiment of the present disclosure.
FIG. 5 illustrates an exemplary representation of a Forecasting flow diagram, in accordance with an embodiment of the present disclosure.
FIG. 6 illustrates an exemplary representation of a Batch level inventory categorization flow, in accordance with an embodiment of the present disclosure.
FIG. 7 illustrates an exemplary representation of Timeline of inventory category prediction, in accordance with an embodiment of the present disclosure.
FIG. 8 illustrates an exemplary representation of an access management and alert system (800), in accordance with an embodiment of the present disclosure.
FIGs. 9A-9C illustrate exemplary user interface representation of creating event based notification, in accordance with an embodiment of the present disclosure.
FIG. 10 illustrates an exemplary computer system (1000) in which or with which embodiments of the present invention can be utilized in accordance with embodiments of the present disclosure.

The foregoing shall be more apparent from the following more detailed description of the invention.

### DETAILED DESCRIPTION OF INVENTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the disclosure as set forth.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

The word "exemplary" and/or "demonstrative" is used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive-in a manner similar to the term "comprising" as an open transition word-without precluding any additional or other elements.

Reference throughout this specification to "one embodiment" or "an embodiment" or "an instance" or "one instance" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

The present invention provides a robust and effective solution to an entity or an organization by enabling the entity to implement a system to optimise inventory management at a warehouse/fulfilment centre (FC) product batch level instead of just at a FC product level. The system categorises each batch of inventory into a plurality of categories or buckets. The system further includes an alert unit configured to send out pre-determined alerts to one or more users whenever a set of predetermined critical conditions arise.

For example, without limitations, the system performs grocery demand planning, demand sensing and inventory optimization at a specific product batch level, i.e. all perishable goods having different expiry dates and manages inventory and alert system to reduce inventory loss. The demand estimation is done in two levels, first a base forecast is calculated, where a best forecast algorithm is automatically chosen for each product at warehouse level. In next level the exogenous variables are used to correct the forecast for various factors that can affect the demand. The exogenous variables include but not limited to local demographics, festivals, calendar, competition etc. The forecast system provides a forecast for upcoming two weeks. Based on the forecasted sales, shelf life of the product and historical sales, and other variables the product batch level inventory is categorized into different buckets to reflect the comfort level with the inventory. Alerts are sent out to business based on predetermined logic to act on product batches that are bound to expire or cause losses.

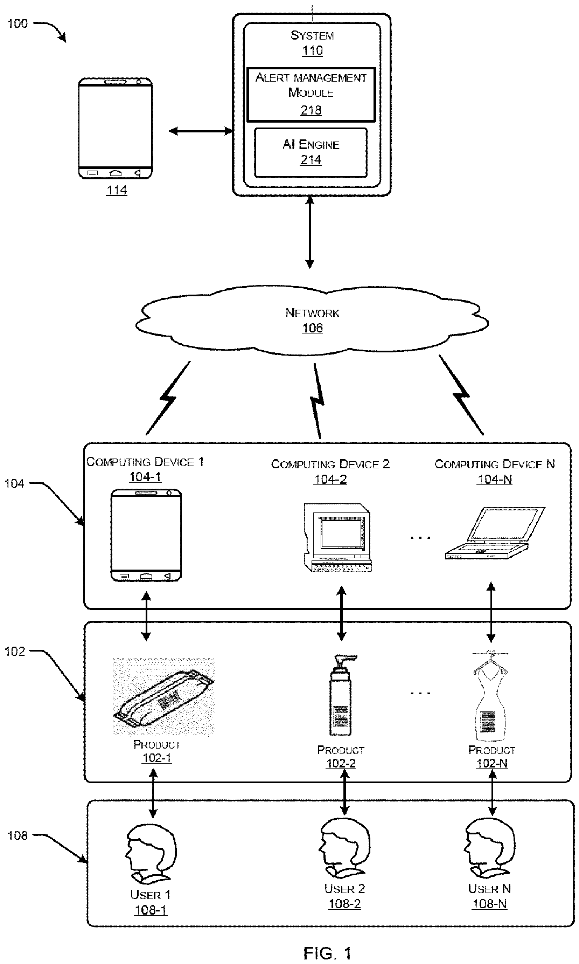

FIG. 1 illustrates an exemplary network architecture (100) in which or with which a system (110) of the present disclosure is implemented, in accordance with an embodiment of the present disclosure. As illustrated in FIG. 1, by way of example and not by not limitation, the exemplary architecture (100) may include a plurality of computing devices (104). For example, the plurality of computing devices (104) can be scanners such as cameras, webcams, scanning units and the like associated with an inventory of the entity and configured to scan a plurality of images from a plurality of objects (102) (also referred to as products herein) associated with an inventory of the entity. Alternatively, the plurality of computing devices can be storage devices configured to store and process sales data, product data, daily inventory data, batch level inventory data, and the like.

The system (110) may extract a first set of attributes pertaining to parameters associated with one or more parameters of the product for example, type of product, an expiry date of the product, demand data, sales data, etc. In an exemplary embodiment, the users (108) can be sellers, merchants but not limited to the like and the entity may be any small or big retail organisation or a company. The system (110) further includes an artificial intelligence (AI) engine (214) to estimate a forecast for a predefined amount of time by automatically selecting a best forecast model from a suite of models, such as, but not limited to, LSTM, XGBoost, ARIMA, and Holt-Winters.. The system (110) further includes an event impact module including a set of exogenous variables that may be applied to correct the forecast to adjust according to a demand during non-cyclic events such as festivals and promotions, wherein an actual demand for a product is estimated by adjusting sales with the inventory to account for stock out scenarios. The exogenous variables include but not limited to local demographics, festivals, calendar, competition etc. The forecast system provides a forecast for upcoming two weeks.

The system (110) further classifies a product into different batches/categories based on the forecasted sales, shelf life of the product and historical sales, and other variables.

The AI engine (214) may utilize, optimization techniques, such as, but not limited to Bayesian optimization-based technique to categorize each batch of inventory into the different categories or buckets, for business to act at a product-batch level instead of product level.

The system (110) can further estimate a prospective future category of the current inventory based on a forecasted demand by the AI engine (214).

The system (110) may further include an alert management module (218) to send out specific product-based alerts to the users based on the categorization. The alerts enable business or users to act on product batches that are bound to expire or cause losses.

The system (110) may further communicate with a second computing device (114) that may include a dashboard to reflect key metrics for inventory optimization and sales management which would be updated on a daily basis.

In an exemplary embodiment, the system (110) may be configured to provide flexibility to modify the preference parameters as per requirements at any stage of the project.

In an embodiment, the user computing device (104) may communicate with the system (110) via set of executable instructions residing on any operating system. In an embodiment, user computing device (104) may include, but not limited to, any electrical, electronic, electro-mechanical or an equipment or a combination of one or more of the above devices such as mobile phone, smartphone, virtual reality (VR) devices, augmented reality (AR) devices, laptop, a general-purpose computer, desktop, personal digital assistant, tablet computer, mainframe computer, or any other computing device, wherein the computing device may include one or more in-built or externally coupled accessories including, but not limited to, a visual aid device such as camera, audio aid, a microphone, a keyboard, input devices for receiving input from a user such as touch pad, touch enabled screen, electronic pen and the like. It may be appreciated that the user computing device (104) may not be restricted to the mentioned devices and various other devices may be used. A smart computing device may be one of the appropriate systems for storing data and other private/sensitive information. The user computing device (104) may include for example, without limitations, a smart phone, a point of service (POS) terminal, electronic carrier for automatic recognition, etc.

In an exemplary embodiment, a network (106) may include, by way of example but not limitation, at least a portion of one or more networks having one or more nodes that transmit, receive, forward, generate, buffer, store, route, switch, process, or a combination thereof, etc. one or more messages, packets, signals, waves, voltage or current levels, some combination thereof, or so forth. A network may include, by way of example but not limitation, one or more of: a wireless network, a wired network, an internet, an intranet, a public network, a private network, a packet-switched network, a circuit-switched network, an ad hoc network, an infrastructure network, a public-switched telephone network (PSTN), a cable network, a cellular network, a satellite network, a fiber optic network, some combination thereof.

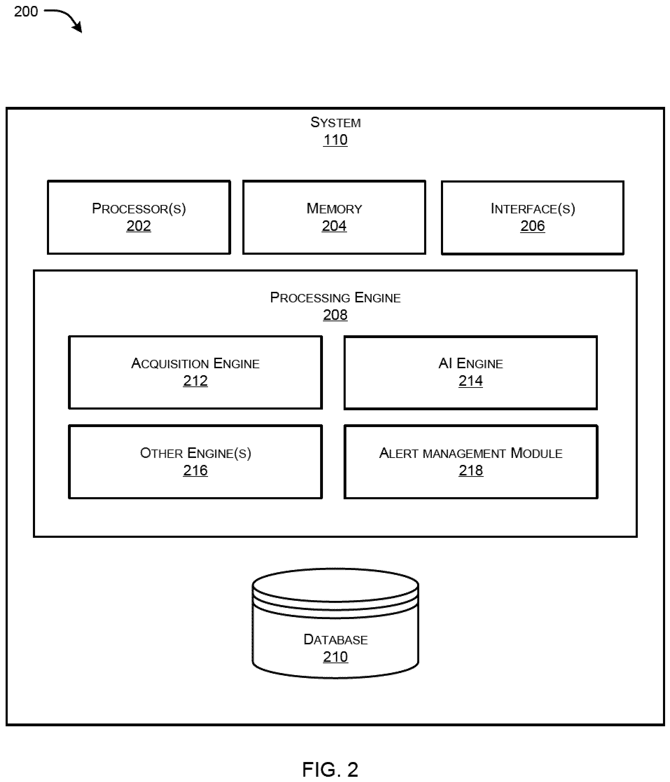

FIG. 2 illustrates an exemplary representation (200) of a forecast and alert system (110) for inventory management, in accordance with an embodiment of the present disclosure.

For example, the system (110) may include one or more processor(s) (202). The one or more processor(s) (202) may be implemented as one or more microprocessors, microcomputers, microcontrollers, edge or fog microcontrollers, digital signal processors, central processing units, logic circuitries, and/or any devices that process data based on operational instructions. Among other capabilities, the one or more processor(s) (202) may be configured to fetch and execute computer-readable instructions stored in a memory (204) of the system (110). The memory (204) may be configured to store one or more computer-readable instructions or routines in a non-transitory computer readable storage medium, which may be fetched and executed to create or share data packets over a network service. The memory (204) may comprise any non-transitory storage device including, for example, volatile memory such as Random-Access Memory (RAM), or non-volatile memory such as Electrically Erasable Programmable Read-only Memory (EPROM), flash memory, and the like.

In an embodiment, the system (110) may include an interface(s) (206). The interface(s) (206) may comprise a variety of interfaces, for example, interfaces for data input and output devices, referred to as input/output (I/O) devices, storage devices, and the like. The interface(s) (206) may facilitate communication for the system (110). The interface(s) (206) may also provide a communication pathway for one or more components of the system (110). Examples of such components include, but are not limited to, processing unit/engine(s) (208) and a database (210).

The processing unit/engine(s) (208) may be implemented as a combination of hardware and programming (for example, programmable instructions) to implement one or more functionalities of the processing engine(s) (208). In examples described herein, such combinations of hardware and programming may be implemented in several different ways. For example, the programming for the processing engine(s) (208) may be processor-executable instructions stored on a non-transitory machine-readable storage medium and the hardware for the processing engine(s) (208) may comprise a processing resource (for example, one or more processors), to execute such instructions. In the present examples, the machine-readable storage medium may store instructions that, when executed by the processing resource, implement the processing engine(s) (208). In such examples, the system (110) may include the machine-readable storage medium storing the instructions and the processing resource to execute the instructions, or the machine-readable storage medium may be separate but accessible to the system (110) and the processing resource. In other examples, the processing engine(s) (208) may be implemented by electronic circuitry. In an aspect, the database (210) may comprise data that may be either stored or generated as a result of functionalities implemented by any of the components of the processor (202) or the processing engines (208).

In an embodiment, the processing engine (208) may include engines that receive data from one or more computing device via a network such as the computing device (104) via the network (106) (e.g., via the Internet) of FIG. 1, to index the data, to analyze the data, and/or to generate statistics based on the analysis or as part of the analysis. In an embodiment, the analyzed data may be stored at the database (210). In an embodiment, the processing engine (208) may include one or more modules/engines such as, but not limited to, an acquisition engine (212), an AI engine/module (214) as described above with reference to FIG. 1, and other engine(s) (216).

Referring to FIG. 2, the database (210) may store the data, i.e., a set of data parameters associated with sales data, product data, daily inventory data, batch level inventory data, etc. used in forecasting demand, performing categorization, and sending alert message. In an embodiment, the database (210) may or may not reside in the system (110). In an embodiment, the system (110) may be operatively coupled with the database (210).

By way of example but not limitation, the one or more processor(s) (202) may receive a user input pertinent to estimating the manpower or human resource deployment plan. In an embodiment, the user input might be received using any suitable input/output device associated with the user interface.

In an embodiment, the one or more processor(s) (202) of the system (110) may cause the acquisition engine (212) to extract the set of data parameters from the database (210) for enabling demand forecasting for a product by the AI module 214 which may be used further used by the other engine(s)/module(s) 216 for demand forecast correction and inventory category optimization. In an embodiment, the one or more processor(s) (202) may cause the AI engine (214) to pre-process the set of data parameters in one or more batches. As described with reference to FIG. 2 above, the AI engine (214) may utilise one or more machine learning models to pre-process the set of data parameters. In an embodiment, the AI engine (214) may perform pre-processing of the set of data parameters to form data in a proper time-series with equal intervals of time, for example, intervals of 1 minute. In an embodiment, results of the pre-processing or analysis may thereafter be transmitted back to the computing device (104), to other devices, to a server providing a web page to a user (102) of the computing device (104), or to other non-device entities.

In an embodiment, based on the pre-processing, the one or more processor(s) (202) may cause the AI engine (214) to forecast demand and optimize product category which is used by an alert management module (218) for sending an alert to business or users to act on goods that are soon to expire.

A person of ordinary skill in the art will appreciate that the exemplary representation (200) may be modular and flexible to accommodate any kind of changes in the system (110). In an embodiment, the data may get collected meticulously and deposited in a cloud-based data lake to be processed to extract actionable insights. Therefore, the aspect of predictive maintenance can be accomplished.

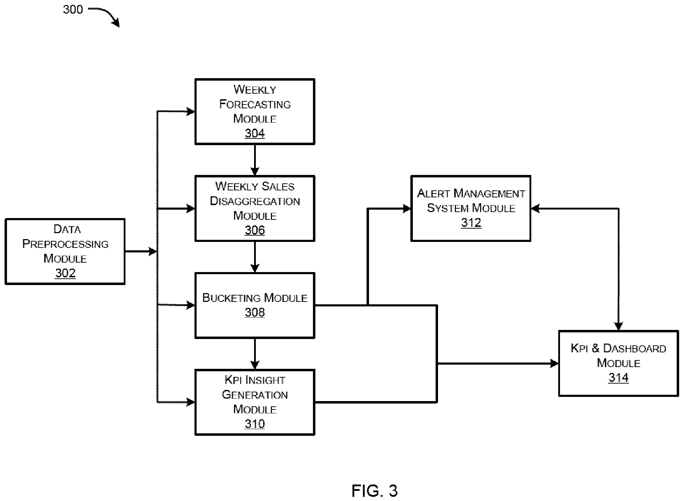

FIG. 3 illustrates exemplary representation of an architecture of the proposed inventory management system (300), in accordance with an embodiment of the present disclosure. In FIG. 3, the inventory management system architecture (300) including a data pre-processing module (302), weekly forecasting module (304), weekly sales disaggregation module (306), a bucketing module (308), key performance indicators (KPI) insight generation module (310), an Alert management system module (312) and a KPI and Dashboard module (314) are shown. The pre-processing module (302) includes data from different sources like sales data, product data, daily inventory data, batch level inventory data, and the like. The data from the pre-processing module (302) serves as an input to the AI engine (214) as shown in FIG. 2 for performing demand forecast estimation. The weekly forecasting module (304) provides demand forecast of products for the upcoming two weeks across all the fulfilment centers (FCs). The weekly sales disaggregation module (306) disaggregates the weekly forecast into daily demand forecast for the remaining days in that week, after considering actual sales till the current day of the week. The bucketing module (308) uses the demand forecast data and product inventory data to provide several levels of inventory categorization at different time periods, wherein the different time periods, for example, without limitations, include a current day, previous week, an upcoming week, a 2^{nd} upcoming week, etc. The KPI Insight generation module (310) generates key business metrics designed based on domain expertise like days to expiry, days on hand, inventory category, etc., which would be useful for trade planning, inventory acquisition, and promotion campaign design etc. The alert management system module (312) provides an end-to-end alert management system for controlling access, creating groups, sub-groups, configuring and sending alerts. For example, without limitations, the alerts might include alerts related to expiry of inventory product batches. The KPI & Dashboard module (314) provides front end application enabling users to view the generated metrics, bucket categorizations and notifications triggered by the alert system.

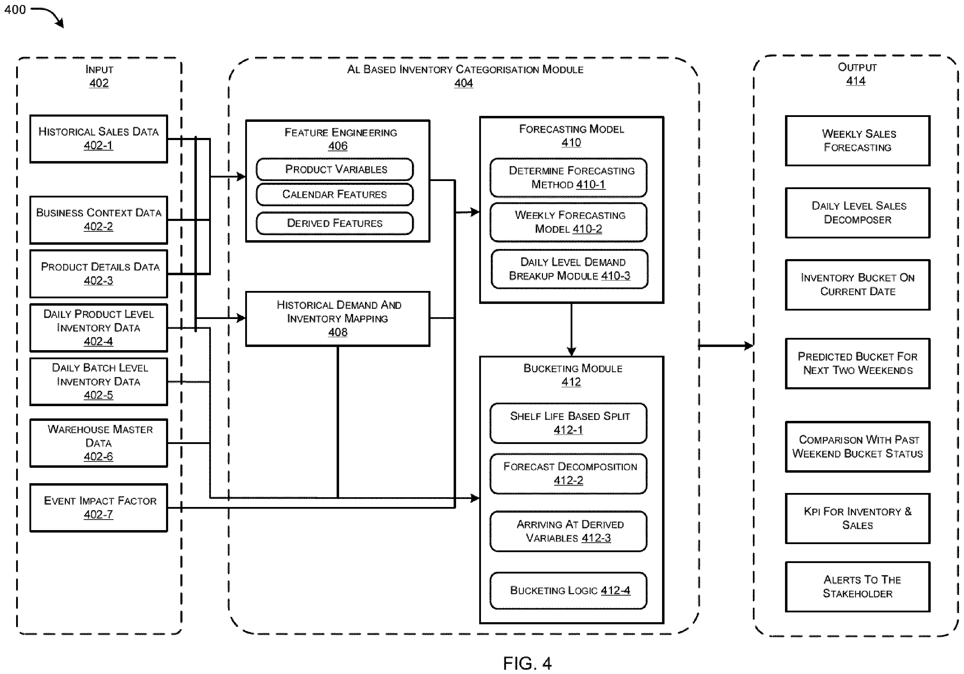

FIG. 4 illustrates an exemplary artificial intelligence (AI) engine module (400), in accordance with an embodiment of the present disclosure. In FIG. 4, an AI based inventory categorization module (404) having a set of inputs or input block (402) and providing a set of outputs or output block (414) is shown.

The input block (402) includes a set of inputs needed by the AI categorization module (404) for performing forecasting and bucketing operations. The input block (402) includes historical sales data (402-1) providing sales data at each warehouse for different products with details like quantity, revenue, discount, and other details regarding the order, business context data (402-2) comprising data related to business inputs, discount information based on the domain expertise, and prevailing market situation, product details data (402-3) includes data pertaining to a product such as product information, category, shelf life, brand, company, etc., daily product level inventory data (402-4) includes overall inventory of the product at each warehouse, daily batch level inventory data (402-5) includes batch level inventory for a product at each warehouse with expiry date information, wherein all batches with same expiry date is considered as one batch over various FCs. The input block 402, further includes warehouse master data (402-6) containing warehouse related data, and an event impact factor (402-7) including information relating to local festivals and specific promotions that may have a significant impact on sales.

Referring to FIG. 4, the AI based Inventory Categorization Module (AI CAT module) (404) comprises a feature engineering module (406) to create features based on the product, calendar level features and other derived features. The feature engineering module (406) also includes inputs from historical sales data (402-1), business context data (402-2) and product details data (402-3) for creating the features. The features created from the feature engineering module (406) may be used by forecasting model (410) for its operation. The AI CAT module (404) includes a Historical demand and inventory mapping (408) module to map daily product level inventory data (402-4) to historical sales data (402-1) to adjust for stock out days, a Forecasting model (410) comprising smaller modules, such as, without limitations, determining a forecasting method 410-1, weekly forecasting model 410-2, and a daily level demand breakup module (410-3). The forecasting model (410) performs a demand forecast estimation for a product, wherein the demand estimation is done at one or more levels. In the present embodiment, the demand forecast is done at two levels. In a first level a base forecast is calculated to determine a best forecast algorithm for each product at warehouse level. In a second level a set of exogenous variables are used to correct the determined forecast for various factors that can affect the demand. The exogenous variables include but not limited to local demographics, festivals, calendar, competition etc. Referring to the FIG. 4, the AI CAT module (404) includes a Bucketing module (412) for categorizing each batch of inventory into different buckets. The bucketing module (412) comprises of smaller modules, such as, without limitations, shelf life based split module (412-1), forecast decomposition module (412-2), a module for arriving at desired variable (412-3) and a bucketing logic module (412-4). The AI engine module (400) may further include an output block (414) generating the following as output:
1. Weekly sales forecasting which includes forecasted sales of each product at FC level for the upcoming two weeks,
2. Daily level sales decomposer which includes Weekly sales that are decomposed into a daily level,
3. Inventory bucket on current date which includes inventory categorization of batch level data based on inventory at start of today,
4. Inventory bucket for next two weekends which includes predicted inventory categories for the upcoming Sunday and a weekend after that,
5. Comparison with past weekend bucket status which includes past weekend bucket of that batch if present, to give a sense of directional trend of inventory status,
6. KPI for inventory and sale which includes various key performance indicators to give the insights into sales and inventory for better business decision, and
7. Alerts to the stakeholders which includes a semi-automated alert system where business can configure when a particular alert needs to be triggered, to whom should it trigger, and the type of trigger based on business use case.

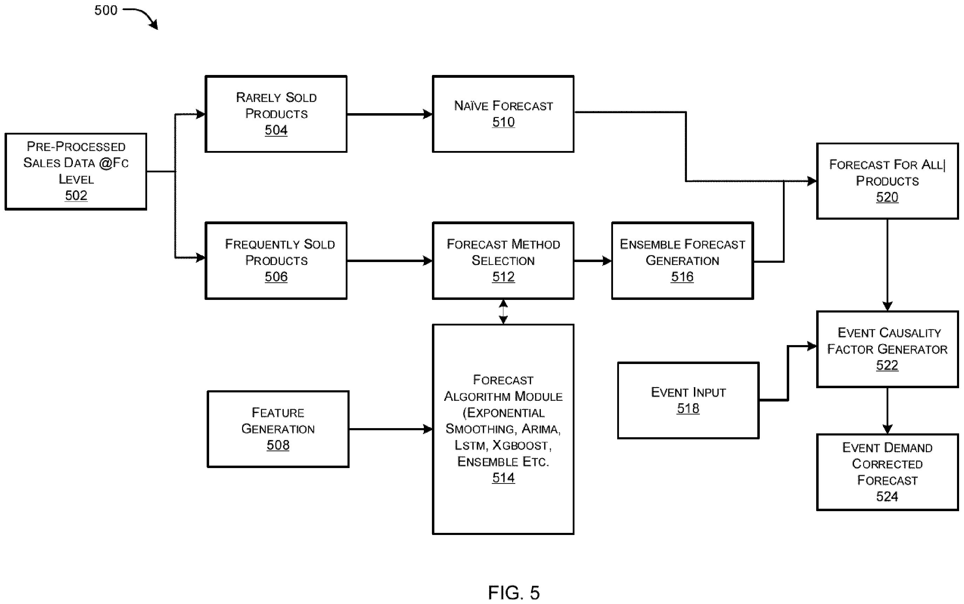

FIG. 5 illustrates an exemplary representation of a Forecasting flow diagram (500), in accordance with an embodiment of the present disclosure. In FIG. 5 the steps involved in forecasting demand for inventory management is shown. The flow diagram (500) includes a list of steps performed by the AI module (214) of system (110) as shown in FIG. 1. The flow diagram (500) at step 502 obtains pre-processed sales data from each fulfilment centre (FC), wherein the pre-processed sales data includes a processed transactional data after making required validations and transformations and basic features derived at the FC at a product level, after obtaining the pre-processed sales data at step 502, the process flow at step 504 checks if the products associated with the pre-processed data are rarely sold products. The rarely sold products fit to a simpler model across each of the FCs separately. A naive forecast, i.e., a basic forecasting method is used at step 510 for forecasting demand for rarely sold products. On the other hand, at step 506 the frequently sold products which majorly contribute to the revenue at each FC level requires a better inventory management technique. Referring to the process flow diagram (500), when the products are found to be frequently sold products, the forecast method selection at step 512 selects a best forecast model from the one or more forecast models such as, without limitations an Autoregressive Integrated Moving Average Model (ARIMA), Long short-term memory model (LSTM), Extreme Gradient Boosting model (XGBOOST), Holt-Winters, etc. from the forecast algorithm module at step 514 to provide the required forecast. At step 508, features are generated based on the selected forecast model. Upon completion of steps 512 and 508 i.e., selection of the forecast method and feature generation at step 508, the method (500) performs ensemble forecast generation at step 514 to pick the best ensemble of models among the selected models and proceeds with forecasting demand for all the products at step 520, i.e., an Aggregated forecast for the low selling and top selling products. Further, at step 518 an event input is provided to correct the forecast based on the event. The event may include one or more exogenous variables that are used to correct the forecast for various factors that can affect the demand. The exogenous variables include but not limited to local demographics, festivals, calendar, competition etc. Once an event input is received at step 518, event causality factor is generated at step 522 which provides causal multiplying factor for the event, the event causality multiplying factor is applied to the forecast demand for all products obtained at step 520 to obtain an event demand corrected forecast at step 524, which is the Final forecast with the demand corrected for a specified event, if any, during the forecast period.

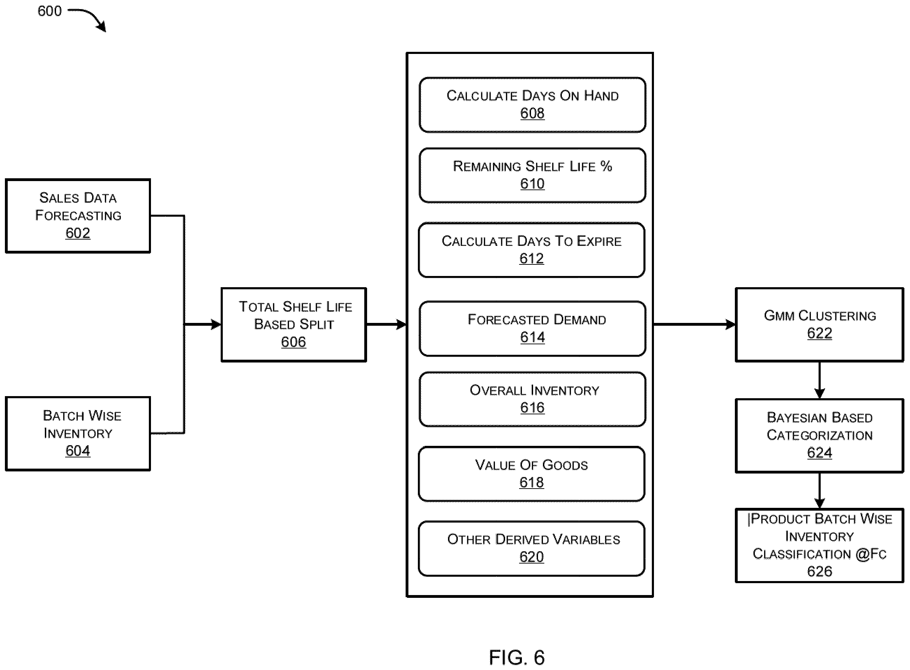

FIG. 6 illustrates an exemplary representation of a batch level inventory categorization flow (600), in accordance with an embodiment of the present disclosure. In FIG. 6, the steps or modules involved in the categorization of the inventory into various buckets is depicted. At step 602, a sales data forecasting related to weekly forecasted sales for next two weeks at FC product level is performed. In one embodiment, the sales data forecasting is based on the estimated demand forecast from the forecast process as explained above with reference to FIG. 5. At step 604 a batch wise inventory processing of preprocessed data of daily batch level inventory at FC level is performed. A total Shelf life based split module at step 606 performs a Shelf life based split to categorize the data. Upon splitting the data based on shelf life at step 606, the process flow performs a set of function by their respective modules. Referring to FIG. 6, a Calculate Days on Hand module at step 608 calculates the number of days on hand for each batch as on that day, a remaining shelf life percentage module at step 610 calculates a remaining shelf life percentage of each batch as on a particular day, a calculate days to expire module at step 612 calculates remaining days for expiry for a specific batch as on the particular day, a Forecasted demand module at step 614 adjusts forecasted demand of each product at the FC level to a batch level, and an overall inventory module at step 616 provides an overall inventory of a product at a specific FC level, a Value of goods module at step 618 specifies value of goods associated with a specified product at the FC level, and other derived variables at step 620 are used in batch level categorization. Referring to FIG. 6, the output from the above discussed modules/process are sent through Gaussian mixed module (GMM) clustering at step 622 to group products at each FC into different clusters.

The process flow (600) further proceeds with performing Bayesian based categorization of batches at step 624 on the GMM clusters, wherein the categorization is determined based on Bayesian thresholds. Upon determining the categorization, a Product batch wise inventory classification module at step 626 classifies the product at each FC to obtain a Final batch level categorized output of the inventory at each FC.

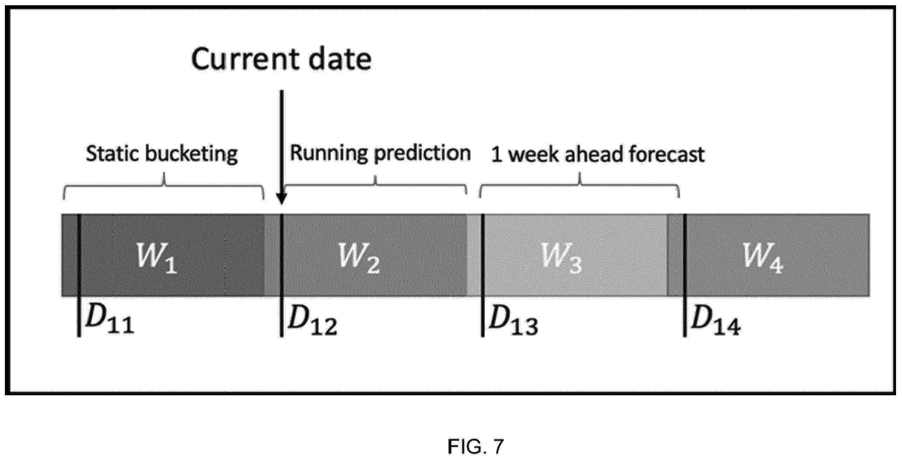

FIG. 7 illustrates an exemplary representation of Timeline of inventory category prediction, in accordance with an embodiment of the present disclosure. In FIG. 7 four stages of inventory categorization namely D₁₁, D₁₂, D₁₃, and D₁₄ are shown. In an aspect of the present embodiment, a batch wise inventory categorization is done on a current day (D₁₂), which gives the inventory categorization based on inventory status at the end of a previous day. This would be a running prediction as the categorization is updated daily. Past weekend bucketing (Dn) is a static bucketing based on inventory at the end of past weekend, this provides for a reference to the past inventory status of a product batch, if a specific product is not present then it is treated as a new entrant in the inventory. Sales forecast is used to predict the batch inventory category at the end of current week (Dis) and at the end of week following the current week (D₁₄). For each of the category the inventory is adjusted based on the forecast and for current weekend inventory is adjusted based on remaining days in that week. For example, if a specific product-batch is expected to be sold out then it is marked as sold out. Four categories over different time period provide how the inventory comfort looks like over a period of 3 weeks, with current inventory status update on a daily basis.

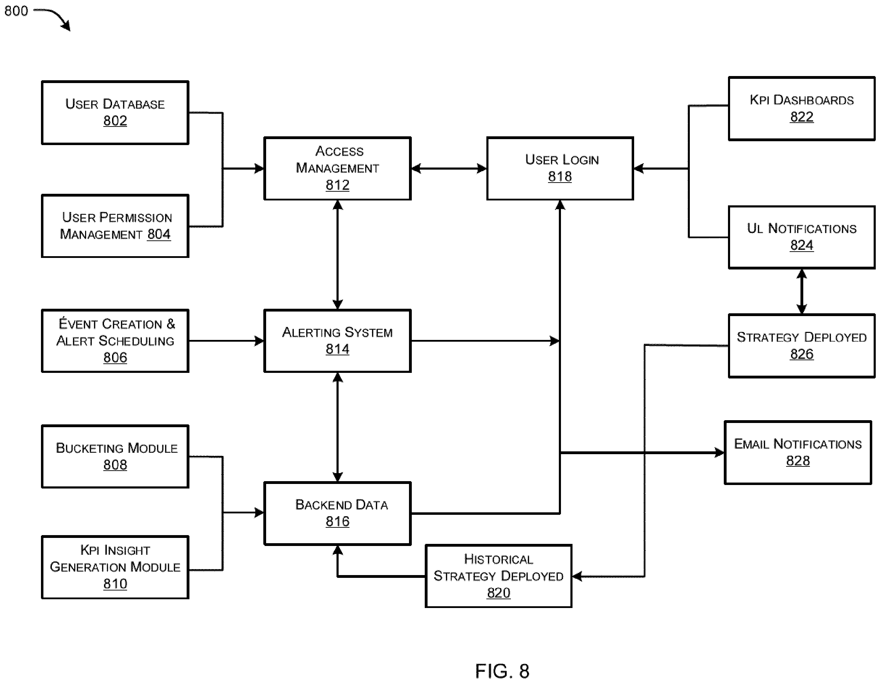

FIG. 8 illustrates an exemplary representation of an access management and alert system (800), in accordance with an embodiment of the present disclosure. As illustrated, in an aspect the access management and alert system (800) may include a User Database (802) Containing user data like region, category, etc., a User permission management module (804) for mapping users to different groups, an Event creation and Alert Scheduling module (806) enables users to create specific business events for which notification is required along with a type of notification required and when the notification has to be sent. The access management and alert system (800) includes a backend data module (816) which comprises output data from a bucketing module (808) and a KPI insight generation module (810), wherein the KPI insights generation module (810) provides key performance indicators related to inventory management, the backend data module (816) also includes backend data to be shown on dashboard or the data that needs to be checked for any event triggers. The access management and alert system (800) further includes an access management module (812) for granting access to the AI output based on user location or category i.e., what to show for a specific logged in user, an alerting system (814) checks for event occurrences and pushes notifications based on settings, and a user login (818) module for access management for the users. The system (800) further includes modules for providing notification such as: KPI dashboards (822) that provide Front end UI for people/stake holders to access the categorization and business insights, user interface (UI) notifications module (824) for displaying notifications on the UI, and an email notifications module (828) for providing email notification to specific users based on specific event setting. Further, the system (800) also includes strategy deployment module (826) which includes entries related to user deployed strategy with respect to an alert notification and a historical strategy module (828) comprising a database of historically deployed strategies for various triggered events or alert notification for tracking and for future use.

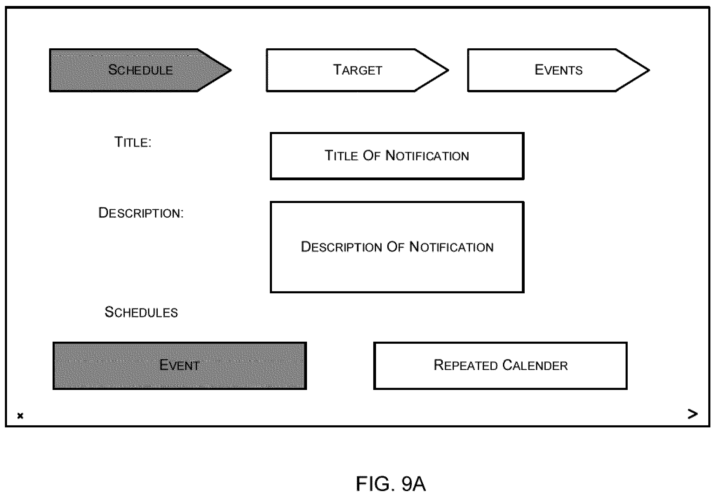

FIGs. 9A-9C illustrates an exemplary user interface representation of creating event based notification, in accordance with an embodiment of the present disclosure.

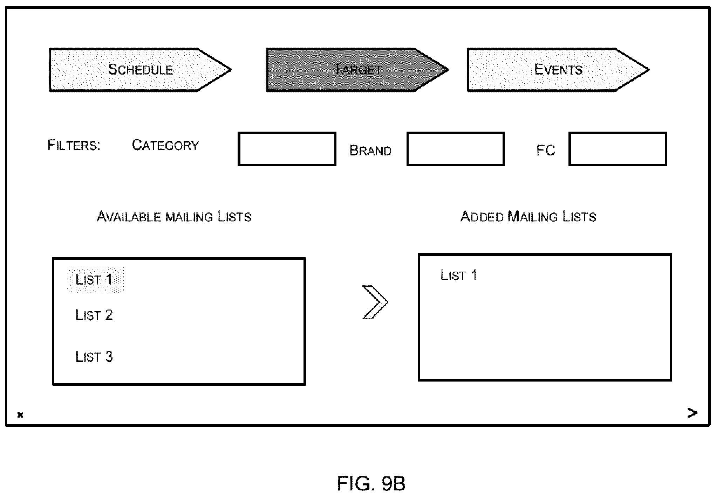

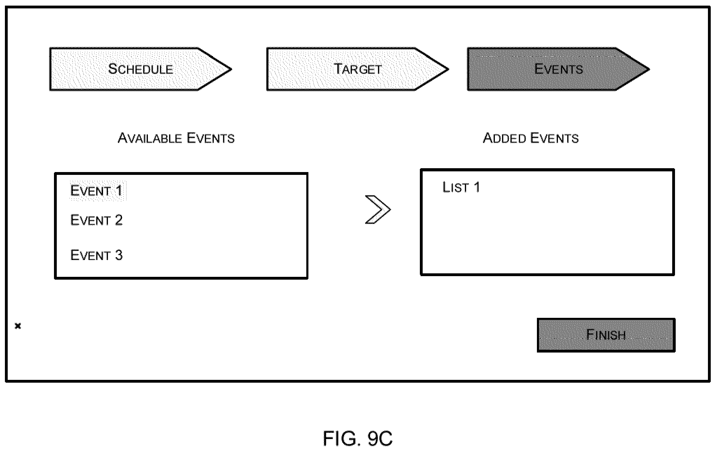

FIG. 9A illustrates a user interface layout during an event scheduling. FIG. 9B highlights target group selection for receiving the notification. FIG. 9C illustrates an UI layout pertaining to enabling or disabling a specific event.

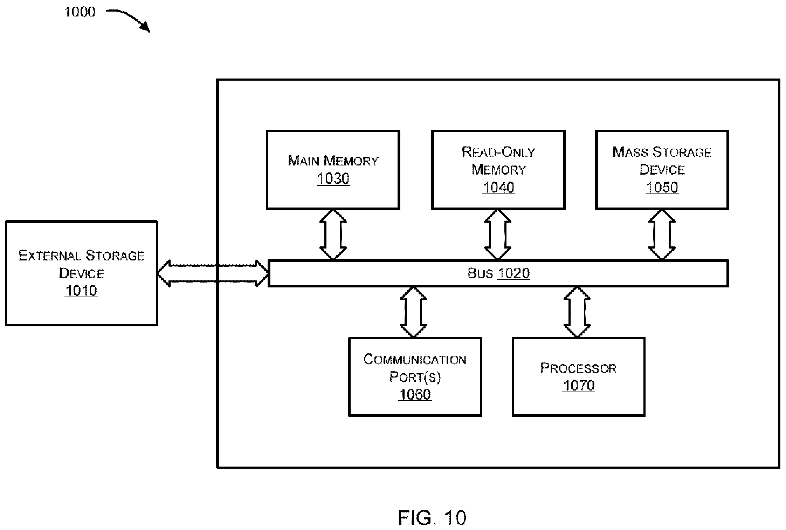

FIG. 10 illustrates an exemplary computer system (1000) in which or with which embodiments of the present invention can be utilized in accordance with embodiments of the present disclosure. As shown in FIG. 10, the computer system (1000) may include an external storage device (1010), a bus (1020), a main memory (1030), a read only memory (1040), a mass storage device (1050), communication port(s) (1060), and a processor (1070). A person skilled in the art will appreciate that the computer system (1000) may include more than one processor (1070) and communication ports (1060). The processor (1070) may include various modules associated with embodiments of the present disclosure. The communication port(s) (1060) may be any of an RS-2102 port for use with a modem based dialup connection, a 10/100 Ethernet port, a Gigabit or 10 Gigabit port using copper or fiber, a serial port, a parallel port, or other existing or future ports. The communication port(s) (1060) may be chosen depending on a network, such a Local Area Network (LAN), Wide Area Network (WAN), or any network to which computer system connects. The main memory (1030) may be Random Access Memory (RAM), or any other dynamic storage device commonly known in the art. The read-only memory (1040) may be any static storage device(s) e.g., but not limited to, a Programmable Read Only Memory (PROM) chips for storing static information e.g., start-up or BIOS instructions for processor (1070). Mass storage (1050) may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), one or more optical discs, Redundant Array of Independent Disks (RAID) storage.

Bus (1020) communicatively couples processor(s) (1070) with the other memory, storage and communication blocks. Bus (1020) can be, e.g. a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor (1070) to software system.

Optionally, operator and administrative interfaces, e.g. a display, keyboard, and a cursor control device, may also be coupled to bus (1020) to support direct operator interaction with a computer system. Other operator and administrative interfaces can be provided through network connections connected through communication port (1060). Components described above are meant only to exemplify various possibilities. In no way should the aforementioned exemplary computer system limit the scope of the present disclosure.

Thus, the present disclosure provides for a unique and efficient system in managing the inventory management of goods with expiry dates in all our online and offline services. Multilevel forecasting framework to forecast demand for various products using LSTM, a variant of Recurrent Neural networks, ARIMA, XGBOOST, Holt-Winters model using various product related features and exogenous features. The system can provide an event correction-based framework to correct the demand for impact of a specific events like festival, promotional effect and the like with weekly to daily sales disaggregation based on a distribution framework. An AI driven inventory optimization module is associated with the system at a batch level based on future forecast and historical sales. A GMM clustering and Bayesian based categorization of the inventory provides a framework for batch level inventory category to forecast for a predetermined time period while an access management and event scheduling system can manage inventory and alerts.

While considerable emphasis has been placed herein on the preferred embodiments, it will be appreciated that many embodiments can be made and that many changes can be made in the preferred embodiments without departing from the principles of the invention. These and other changes in the preferred embodiments of the invention will be apparent to those skilled in the art from the disclosure herein, whereby it is to be distinctly understood that the foregoing descriptive matter to be implemented merely as illustrative of the invention and not as limitation.

A portion of the disclosure of this patent document contains material, which is subject to intellectual property rights such as but are not limited to, copyright, design, trademark, integrated circuit (IC) layout design, and/or trade dress protection, belonging to Jio Platforms Limited (JPL) or its affiliates (hereinafter referred as owner). The owner has no objection to the facsimile reproduction by anyone of the patent document or the patent disclosure, as it appears in the Patent and Trademark Office patent files or records, but otherwise reserves all rights whatsoever. All rights to such intellectual property are fully reserved by the owner.

### ADVANTAGES OF THE PRESENT DISCLOSURE

The present disclosure is useful in managing the inventory of perishable goods that have expiry dates to avoid loss of goods at the same time ensuring enough stock when there is a high demand for the goods.

The present disclosure is enables better supply chain management services across retail units in B2B (business to business) and B2C (business to customers) segments.

## Claims

1. A system (110) for forecasting inventory, said system (110) comprising:
one or more processors (202); and
a memory (204) operatively coupled to the one or more processors (202), wherein the memory (204) comprises processor-executable instructions, which on execution, cause the one or more processors (202) to:
estimate a demand associated with a product by calculating a demand forecast data and correcting the calculated demand forecast data;
categorize the inventory into different buckets at a product batch level based on the estimated demand; and
forecast a warehouse level inventory demand for a predefined time based on the categorization.

2. The system (110) as claimed in claim 1, wherein the memory (204) comprises processor-executable instructions, which on execution, cause the one or more processors (202) to calculate the demand forecast data based on a forecast algorithm, and wherein the forecast algorithm comprises at least one of: an Autoregressive Integrated Moving Average Model (ARIMA), a Long short-term memory model (LSTM), an Extreme Gradient Boosting model (XGBOOST), and Holt-Winters.

3. The system (110) as claimed in claim 1, wherein the memory (204) comprises processor-executable instructions, which on execution, cause the one or more processors (202) to correct the calculated demand forecast data based on exogenous variables, and wherein the exogenous variables comprise at least one of: local demographics, festivals, calendar, and competition.

4. The system (110) as claimed in claim 1, wherein the memory (204) comprises processor-executable instructions, which on execution, cause the one or more processors (202) to send an alert to users based on the categorization.

5. The system (110) as claimed in claim 1, wherein the memory (204) comprises processor-executable instructions, which on execution, cause the one or more processors (202) to estimate a future category of the current inventory based on the forecasted demand.

6. The system (110) as claimed in claim 1, wherein the memory (204) comprises processor-executable instructions, which on execution, cause the one or more processors (202) to provide key metrics for the inventory optimization and update the key metrics periodically.

7. The system (110) as claimed in claim 1, wherein to categorize the inventory into different buckets at the product batch level is based on Bayesian optimization.

8. A method for forecasting inventory, said method comprising:
calculating, by a processor (202), a demand forecast data based on a forecast algorithm;
correcting, by the processor (202), the calculated demand forecast data based on one or more exogenous variables;
categorizing, by the processor (202), the inventory into different buckets at a product batch level; and
forecasting, by the processor (202), a warehouse level inventory demand for a predefined time based on the categorization.

9. The method as claimed in claim 8, further comprising:
predicting, by the processor (202), the demand forecast data for one or more upcoming weeks.

10. The method as claimed in claim 8, comprising sending an alert, by the processor (202), to one or more users based on the categorization.

11. A user equipment (UE) (104) for forecasting inventory, comprising:
one or more processors; and
a memory operatively coupled to the one or more processors, wherein the memory comprises processor-executable instructions, which on execution, cause the one or more processors to:
transmit a pre-processed data comprising at least one of sales data, product data, daily inventory data, and batch level inventory data to an optimization system; and
receive an alert from the optimization system based on a categorization performed by the optimization system on the transmitted pre-processed data.
